# EUROPEAN PATENT SPECIFICATION

(11) **EP 3 794 281 B1**
(45) Date of publication and mention of the grant of the patent: **07.08.2024**
(21) Application number: 19727248.7
(22) Date of filing: 14.05.2019
(51) Int. Cl.: F23K 3/00

(54) **PELLET HOPPER LINER**
AUSKLEIDUNG FÜR GRANULATTRICHTER
REVÊTEMENT DE TRÉMIE À GRANULÉS

(30) Priority: 14.05.2018 US 201862670960 P
(43) Date of publication of application: 24.03.2021
(73) Proprietor: Traeger Pellet Grills, LLC, Salt Lake City, Utah 84106 (US)
(72) Inventor: COLSTON, Michael, Salt Lake City, Utah 84103 (US); SLUDER, Daniel, Salt Lake City, Utah 84103 (US); HOANG, Phuong, Stamford, CT 06902 (US)
(74) Representative: Grünecker Patent- und Rechtsanwälte PartG mbB
(86) International application number: PCT/US2019/032211
(87) International publication number: WO 2019/222209

(56) References cited:
- KR-B1- 101 515 001
- KR-B1- 101 627 991
- KR-U- 20170 003 713
- US-A1- 2014 326 232

## Description

### PRIORITY CLAIM

This patent claims the benefit of the filing date of United States Provisional Patent Application Serial No. 62/670,960, filed May 14, 2018, for "PELLET HOPPER LINER."

### BACKGROUND

### 1. The Field of the Invention

The present invention relates generally to systems, methods, and devices for grilling and warming food products.

### 2. Background and Relevant Art

Consumers use a variety of grilling devices for cooking food products, in particular for grilling and warming food products. Numerous grilling devices utilize wood pellets or other fuel to cook food. Pellet grills typically include a cavity, external to the grill cavity, which holds pellets before they are combusted to grill or warm food. Those skilled in the art often refer to this external cavity as a hopper. Various examples of a hopper are shown in US 2014/326232 A1, KR 101 627 991 B1, KR 2017 0003713 U and KR 101 515 001 B1.

The hopper typically connects to an auger system, which slowly removes pellets from the hopper. In conventional implementations, the auger system connects to the bottom of the hopper. The auger system moves the pellets from the hopper, which is external to the grill cavity, to a firepot, which is situated within the grill cavity. A heating element within the firepot combusts the pellets as they reach the firepot, thus providing heat with which to cook and/or warm food products.

To effectively cook with a pellet grill as described above, the pellet grill must smoothly transition the pellets from the hopper to the auger system. Perturbations in the pellet transition process occur for a variety of reasons, including, for example, when consumers use wet pellets or when producers inefficiently design the grilling system. When a pellet grill fails to allow the pellets to evacuate from the hopper, the grilling system ceases to produce heat with which to cook and/or warm food products. Users are then required, due to the resultant temperature drop, to restart the grilling process, which often affects the quality of the resulting food products and causes frustration and delay.

Accordingly, there are a number of disadvantages in grilling devices and systems that can be addressed.

### INVENTION

Embodiments of the present invention solve one or more of the foregoing or other problems in the art with systems, methods, and devices for improved grills, as well as components and/or sub-components thereof. In particular, implementations of the present invention relate to hoppers for pellet grills.

The present invention provides a pellet hopper assembly in accordance with claim Further embodiments of the invention are provided in accordance with the dependent claims.

Additional features and advantages of exemplary implementations of the present invention will be set forth in the description which follows, and in part will be obvious from the description, or may be learned by the practice of such exemplary implementations. The features and advantages of such implementations may be realized and obtained by means of the instruments and combinations particularly pointed out in the appended claims. These and other features will become more fully apparent from the following description and appended claims, or may be learned by the practice of such exemplary implementations as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
FIG. 2A illustrates a perspective view of a hopper bottom according to an embodiment of the present invention;
FIG. 2B illustrates a front view of a hopper bottom according to an embodiment of the present invention;
FIG. 2C illustrates a right view of a hopper bottom according to an embodiment of the present invention;
FIG. 3A illustrates a perspective view of an additional embodiment of a hopper bottom according to the present invention;
FIG. 3B illustrates a front view of an additional embodiment of a hopper bottom according to the present invention;
FIG. 3C illustrates a left view of an additional embodiment of a hopper bottom according to the present invention;
FIG. 4A illustrates a perspective view of a hopper bottom assembly according to the present invention; FIG. 5A illustrates a perspective view of a hopper bottom assembly according to an embodiment of the present invention
FIG. 5C illustrates a right view of a hopper bottom assembly according to an embodiment of the present invention; FIG. 5D illustrates a rear view of a hopper bottom assembly according to an embodiment of the present invention; FIG. 5E illustrates a perspective view of a hopper bottom assembly according to an embodiment of the present invention;
FIG.6 illustrates a perspective view of a hopper bottom assembly with horizontal surfaces surrounding a pellet opening;
FIG.7 illustrates a perspective view of a hopper evacuation insert positioned within a hopper bottom assembly:
   FIG. 8A illustrates a perspective view of a hopper evacuation insert according to an embodiment of the present invention; FIG. 8B illustrates a front view of a hopper evacuation insert according to an embodiment of the present invention:
   FIG.8C illustrates a rear view of a hopper evacuation insert according to an embodiment of the present invention;

### MODE(S) FOR CARRYING OUT THE INVENTION

The present invention relates generally to systems, methods, and devices for grilling and warming food products. In particular, implementations of the present invention relate to self-cleaning pellet grills. For example, one or more embodiments of the present invention include a hopper bottom which has a first bottom panel connected to a second bottom panel at a first interface and connected to a third bottom panel at a second interface. The first, second and third innermost edges of each of the three respective bottom panels at least partially define a pellet evacuation opening. Each of the three bottom panels respectively form first, second and third nonzero angles with respect to a horizontal plane such that each bottom panel tilts downwards towards the pellet evacuation opening.

The hopper with smooth pellet drop of the present invention includes features that increase the evacuation efficiency of the hopper, thus reducing the incidence of pellet evacuation failure. The embodiments disclosed herein, where implemented, may reduce the frequency of temperature loss during the processes of grilling and warming food products. Users are therefore able to use pellet grills without scrupulously overseeing the evacuation status of the pellet fuel into the auger system. Users are also more able to avoid the need to restart the grilling and/or warming process in response to a failed pellet evacuation. Additionally, in some instances, the aforementioned benefits are available to existing pellet grills via after-market modification, as described below.

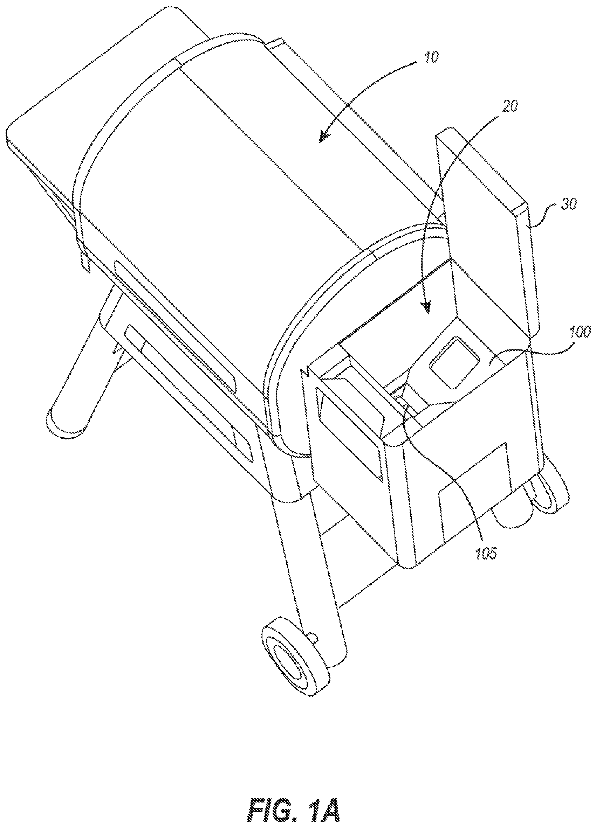

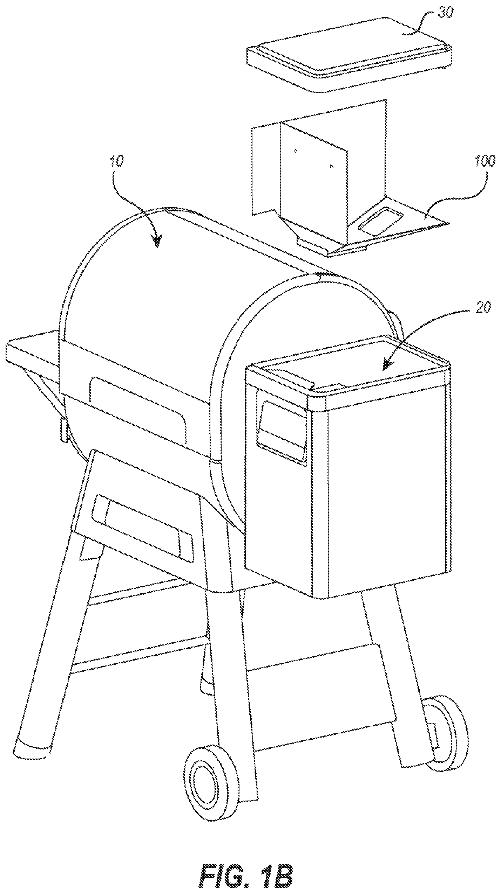

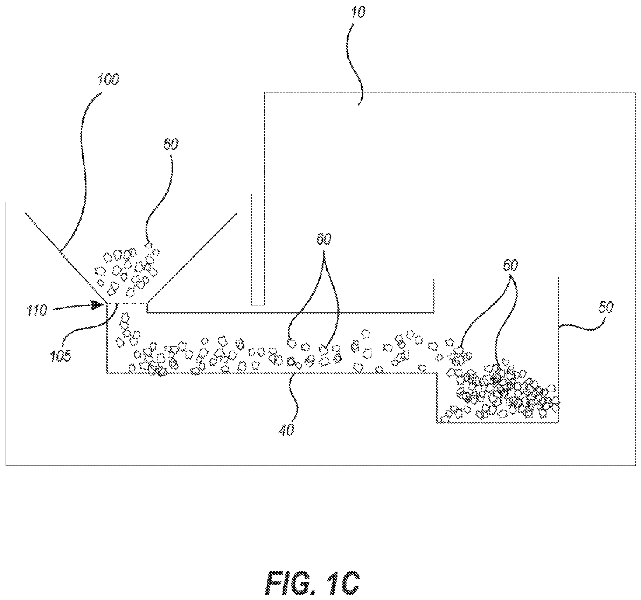

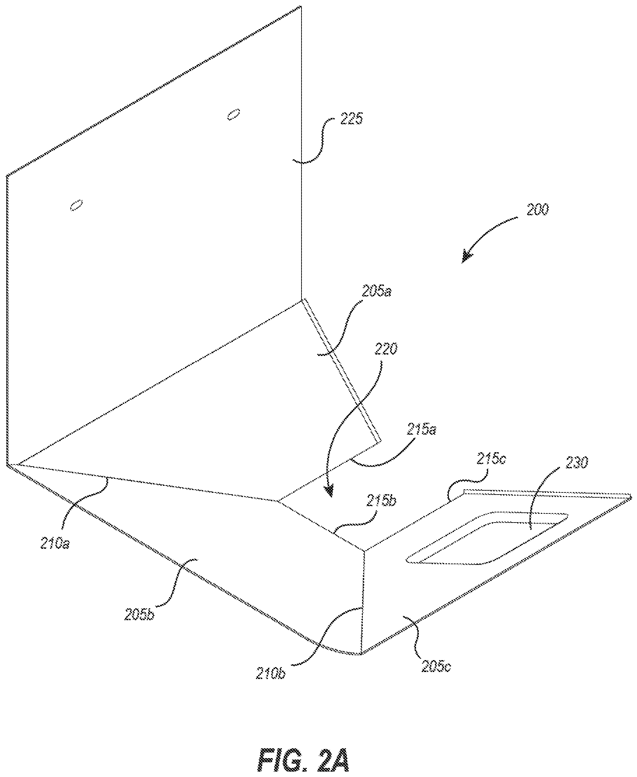

FIGS. 2A-2C illustrate various views of a hopper bottom embodiment according to the present invention. In the embodiment shown, the hopper bottom includes bottom panels, or surfaces, which at least partially surround a pellet evacuation opening. In some instances, the pellet evacuation opening is positioned over an auger system, which receives fuel pellets from the hopper bottom as they exit the hopper bottom.

The bottom panels extend from the pellet evacuation opening to a predetermined perimeter. At the perimeter, the bottom panels are adapted to adjoin sidewalls. For example, as shown, one of the bottom panels is integrally formed with a sidewall. Other adjoining methods are also within the scope of this invention (such as welding, liquid or strip adhesives, etc.) Similarly, each of the bottom panels are configured to adjoin one another. In the illustrated embodiment, each of the bottom panels are integrally formed with one another (i.e., the hopper bottom is formed by folding a single sheet of material).

The hopper bottom may adjoin a wall proximate to a grill cavity. In the illustrated embodiment, two of the bottom panels on opposite sides of the pellet evacuation opening are adapted to adjoin a wall proximate to a grill cavity. The pellet evacuation opening is also positioned such that the wall proximate to the grill cavity will define one side of the pellet evacuation opening. In some instances, this configuration optimizes the distance that the auger system positioned underneath the pellet evacuation opening will need to transport the pellets before they reach the firepot within the grill cavity.

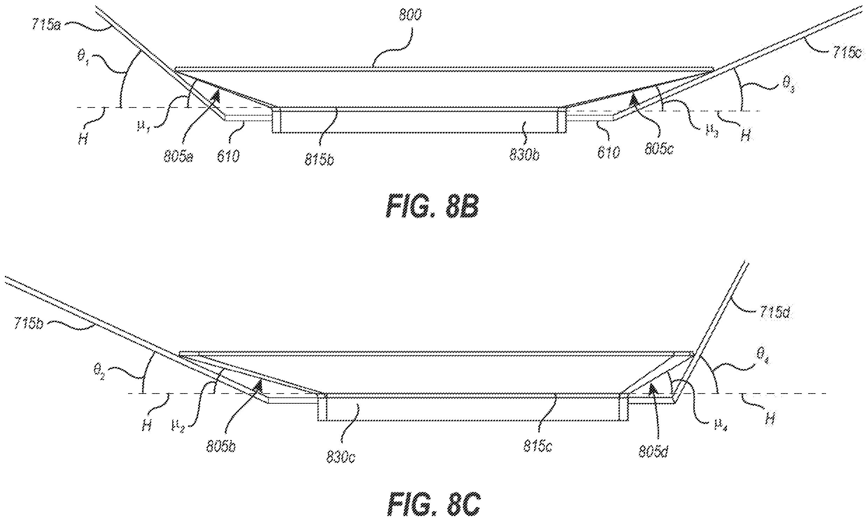

Existing designs for pellet grill hopper bottoms typically include horizontal surfaces which at least partially form the bottom panels and surround the pellet evacuation opening(see FIG. 8B and 8C). Hopper bottoms often require such horizontal surfaces in order to effectuate a water seal (e.g., by placing a gasket between parallel surfaces of the hopper bottom and the auger system) to prevent water from entering the auger system, since water can cause fuel pellets to stick to one another and can thereby prevent pellet evacuation. The horizontal surfaces, however, can also cause fuel pellets to come to rest rather than drop into the auger system. This results in reduced evacuation efficiency and/or total disruption of the grilling process (e.g., where pellets become clogged in the hopper bottom).

As demonstrated in FIG. 2A, the hopper bottom includes no horizontal surfaces surrounding the pellet evacuation opening, with the exception of the auxiliary evacuation opening, which is situated some distance from the pellet evacuation opening. Put differently, for each bottom panel, the angle between surface and a horizontal axis is substantially constant throughout the length of each bottom panel between the pellet evacuation opening and the perimeter of the hopper bottom (with the exception of the auxiliary evacuation opening).

The displayed configuration, in some instances, prevents pellets from coming to rest before reaching the auger system. Additionally or alternatively, this configuration prevents the fuel pellets from becoming clogged in the hopper, and therefore prevents disruption of the cooking/grilling process.

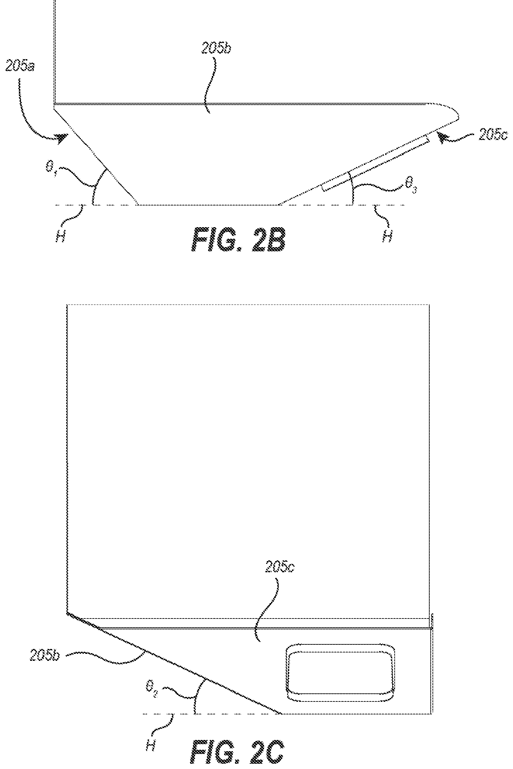

Figures 2B and 2C display, respectively, front and right views of the hopper bottom according to FIG. 2A. As is evident from these figures, the bottom panels make different angles with the horizontal (48.77°, 25.46°, and 25°). It should be noted that those skilled in the art will recognize that other angles may be utilized in other embodiments of the hopper bottom (e.g., the angle for each panel could be the same). The angles may be selected based on certain criteria, including, but not limited to, resultant pellet capacity, pellet evacuation efficiency, number of bottom panels to be used, coating to be used with the bottom panels, and other criteria.

Although the pellet evacuation opening displayed in FIGS. 2A-2C is surrounded by only 3 bottom panels, those skilled in the art will recognize that the pellet evacuation opening could be surround by any number of bottom panels comprising the hopper bottom. Additionally, those skilled in the art will recognize that the pellet evacuation opening may take any position with respect to the bottom panels (e.g., positioned so as to not adjoin a sidewall), and may be of any appropriate shape and size.

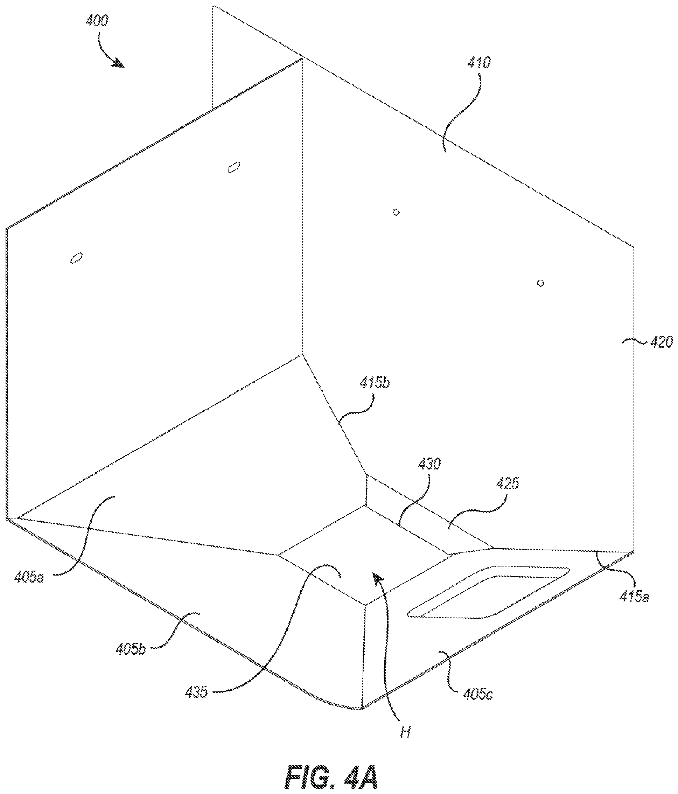

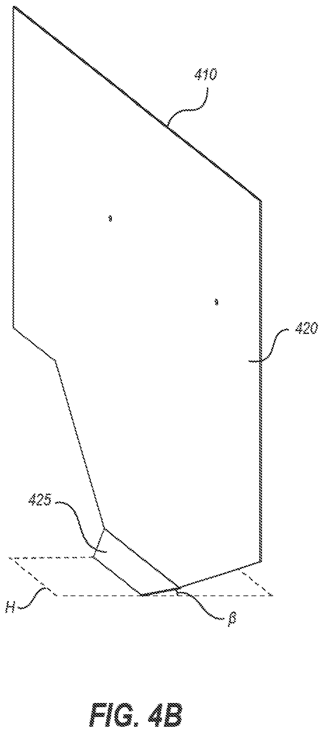

FIGS. 4A-4B illustrate various views of a hopper bottom assembly, wherein the hopper bottom of FIGS. 2A-2C is connected with a wall panel proximate to a grill cavity and a shelf plate. It should be noted that any acceptable connection method may be used in creating the assembly depicted (e.g., welding or integrally forming all parts with each other).

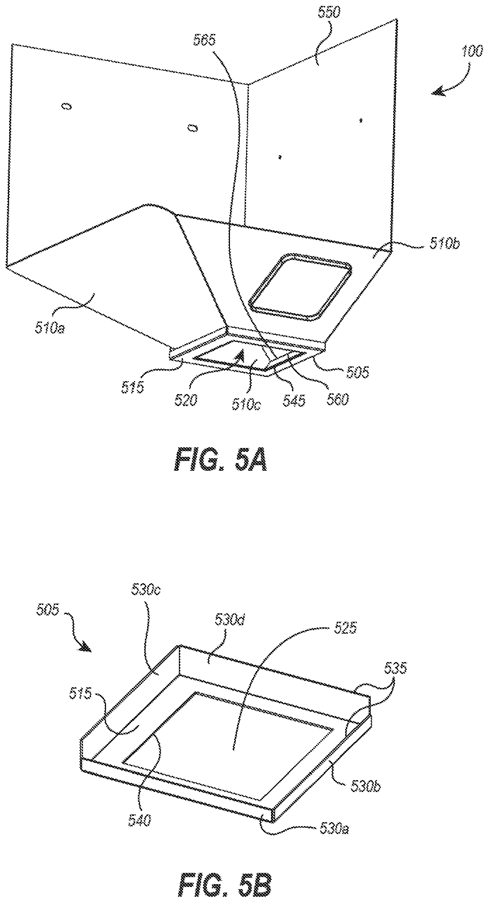

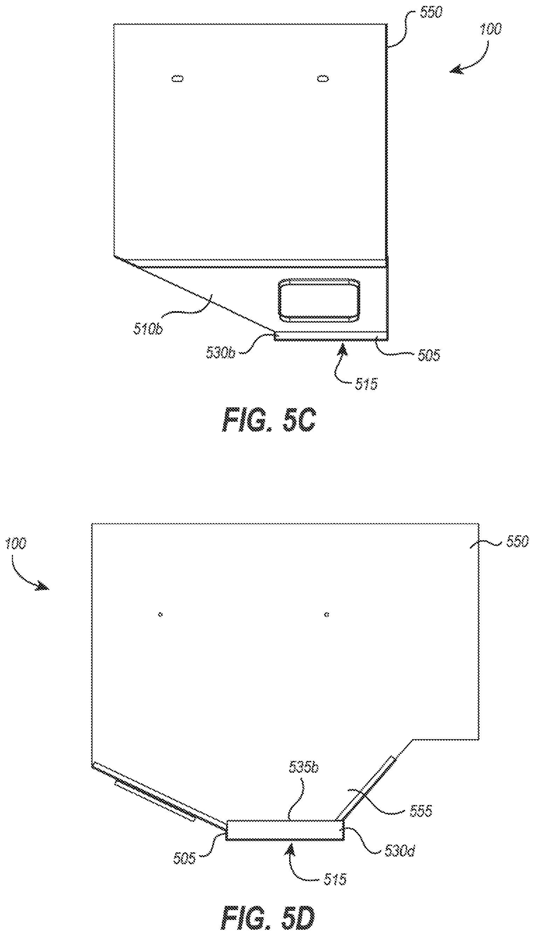

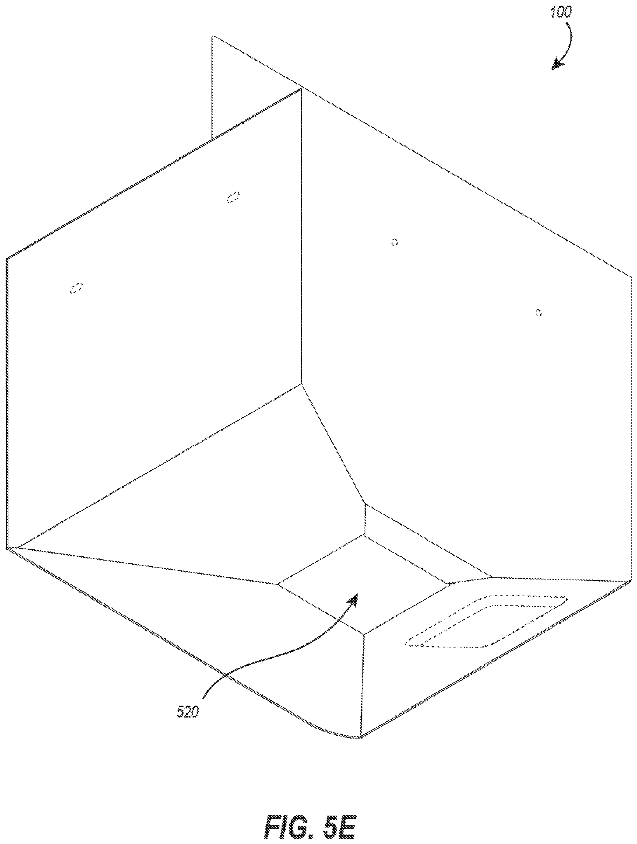

In implementations where the hopper assembly is modular and separable from the rest of the pellet grilling system, a manufacturer or assembly may need to ensure that the interface between the hopper bottom and the auger system is configurable to prevent external contaminants from entering the grilling system (e.g., water). For example, the wall panel and shelf plate which are part of the hopper bottom assembly illustrated in FIGS. 5A-5D include bottom horizontal surfaces which are separate from the bottom panels of the hopper bottom described above, and therefore do not immediately surround the interior of the pellet evacuation opening. This allows a gasket to be used between the hopper bottom assembly and the auger system to effectuate a water seal (see FIG. 5A). As illustrated in FIGS. 5A-5B, the wall panel to which the hopper bottom connects includes a bottom angled surface and a bottom horizontal surface. The bottom angled surface is beneficial to prevent clogging of the pellets as they evacuate from the hopper, since a horizontal surface by itself at the bottom of the wall panel would pose the same problems as described with respect to the bottom panels of the hopper bottom.

Situated underneath the bottom angled surface is a bottom horizontal surface (see FIG. 5A-5D), which provides, in conjunction with the shelf plate described below, a substantially planar surface upon which a gasket may be placed to form a water seal between the hopper bottom assembly and the auger system.

While the embodiment illustrated in FIGS. 5A-5D is described as being configured to be usable with a gasket seal, it should be noted that those skilled in the art would recognize that other sealing methods are usable with the embodiments of the present invention (e.g., caulk, welding, and/or adhesive seals). It should also be noted that in some instances, a wall panel is used without an angled bottom surface (e.g., where the wall panel is integrally formed with the auger system and/or grill cavity so as to not require a gasket connection underneath the wall panel).

FIG. 5B illustrates the shelf plate connected to the underside of the hopper bottom.
As noted above, the bottom panels of the hopper bottom do not include horizontal surfaces surrounding or near the pellet evacuation opening. In implementations where such horizontal surfaces are needed to effectuate a water seal, the shelf plate connects to the underside of the hopper bottom such that the three-sided horizontal surface of the shelf plate is substantially parallel to other horizontal surfaces to be used in effecting the water seal (e.g., the bottom horizontal surface of the wall panel and the corresponding horizontal surface(s) of the auger system). In the illustrated embodiment, the three-sided horizontal surface of the shelf plate are positioned adjacent to the bottom horizontal surface of the wall panel, such that a rectangular gasket is usable with the assembly shown.

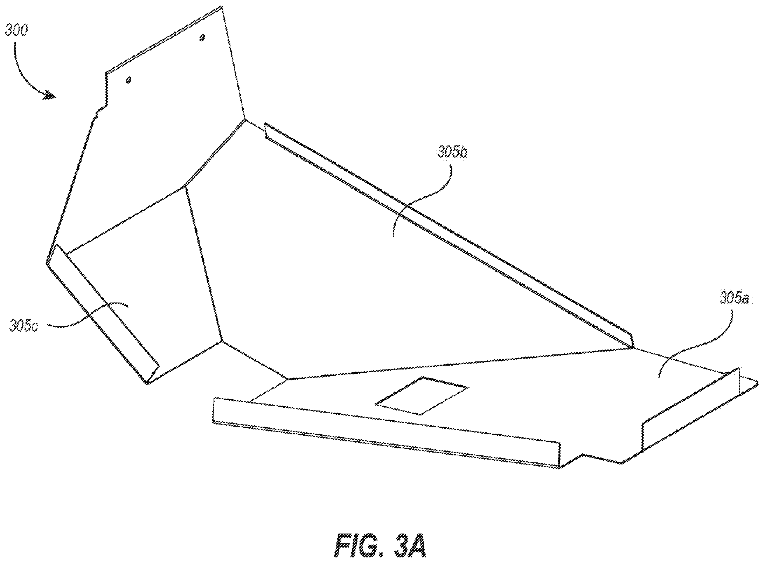

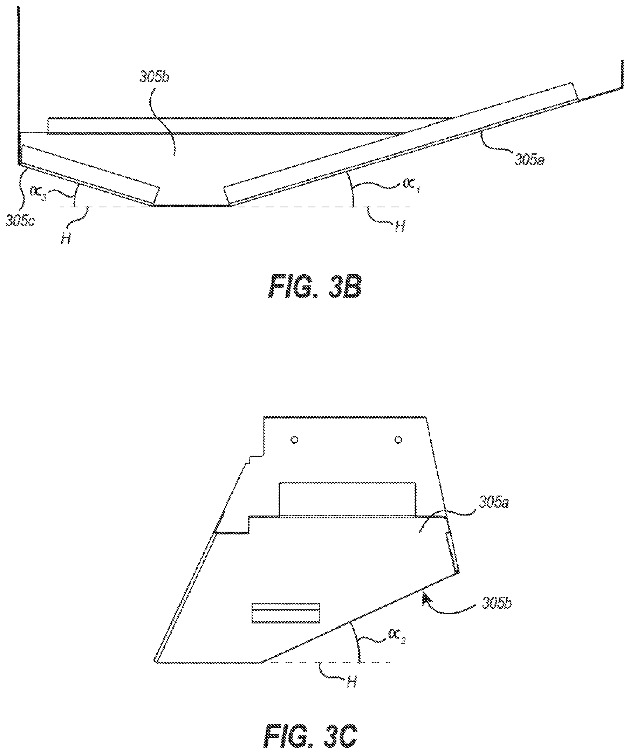

Those skilled in the art will understand that the particular dimensions and/or shape of the elements of the embodiment shown in Figures 2A-2C and 5A-5D are illustrative and do not necessarily limit the scope of the invention at hand. Figures 3A-3C demonstrate the versatility of the present invention by illustrating an embodiment of a hopper bottom adapted to function with different pellet grill geometry. In particular, the hopper bottom embodiment depicted in Figures 3A-3C is adapted to abut a wall panel proximate to a grill cavity which is itself slanted. Additionally, the bottom panels of the depicted hopper bottom embodiment make different angles with the horizontal when compared with the embodiment shown in Figures 2A-2C and 5A-5D (i.e., 17.31°, 16.69°, and 24.56°). The hopper bottom shown in Figures 3A-3C is similarly connectable to a shelf plate in order to form a water seal at an interface between the hopper bottom and an auger system.

Many users own pellet grills which include hoppers with bottom panels that comprise horizontal surfaces that surround the pellet evacuation opening. In many instances, the horizontal surfaces cause the pellets to come to rest before successfully evacuating from the hopper, which disrupts the grilling process. The benefits of the present invention (e.g., increased pellet evacuation efficiency and decreased incidence of pellet clogging) may be implemented into such existing pellet grills, as described below.

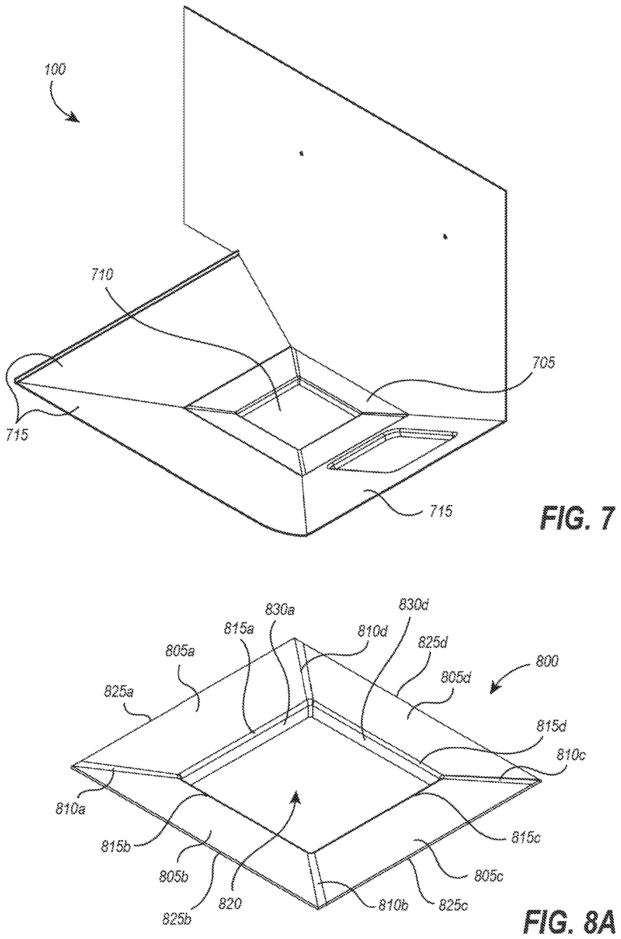

Figures 7 and 8A-8C show an embodiment of a hopper evacuation insert which may be utilized with an existing hopper to ameliorate the problems associated with bottom panels that include horizontal surfaces near or surrounding a pellet evacuation opening. The hopper evacuation insert shown has four angled trapezoidal surfaces. In many instances, the number of angled trapezoidal surfaces corresponds to the number of bottom panels included in the hopper bottom of the existing pellet grill. Furthermore, in some instances, the angles of the trapezoidal surfaces correspond to the angles that the bottom panels of the hopper bottom make with a horizontal axis. In some instances, however, the angles of the trapezoidal surfaces are greater or lesser than the angles of the bottom panels of the hopper bottom of the existing pellet grill. In the illustrated embodiment, the trapezoidal surfaces have angles that are less than the corresponding bottom panels of the hopper bottom shown in FIG. 7 (21.40°, 14.19°, 15.86°, and 30.62°).

The hopper evacuation insert embodiment depicted in Figures 7 and 8A-8C also includes a vertical border, which extends downward from the innermost sides of the trapezoidal surfaces. Without the vertical border, placing the trapezoidal surfaces on the hopper bottom may form a groove between the innermost borders of the trapezoidal surfaces and the horizontal surfaces of the hopper bottom. Such a groove could cause the edges of the fuel pellets to become lodged within the groove, causing clogging of the fuel pellets. The vertical border prevents exposure of this groove, and thus helps to safeguard pellet evacuation efficiency. The vertical border may also serve to increase the stability of the hopper evacuation insert when placed in the existing hopper bottom.

In alternative embodiments, however, the trapezoidal surfaces of the hopper evacuation insert are adapted to continue directly from the respective edges/portions of the existing hopper bottom panels to the innermost boundaries of the horizontal surfaces that surround the pellet evacuation opening. In such embodiments, no groove is formed. Accordingly, in some embodiments, there is no need for a vertical border as described above.

The hopper evacuation insert is adapted to be inserted into an existing hopper bottom, as demonstrated in FIG. 7-8C. As illustrated, the hopper evacuation insert is positioned so as to cover the horizontal surfaces of the hopper bottom, which surround the pellet evacuation opening. This provides the fuel pellets with a slanted path towards the pellet evacuation opening throughout the entirety of the hopper bottom, removing the possibility of the pellets coming to rest on a horizontal surface.
Utilizing the hopper evacuation insert as illustrated in FIG. 7-8C does not compromise the functionality of the existing horizontal surfaces of the hopper bottom (i.e., they may still be used in a sealing system between the hopper bottom and the auger system).

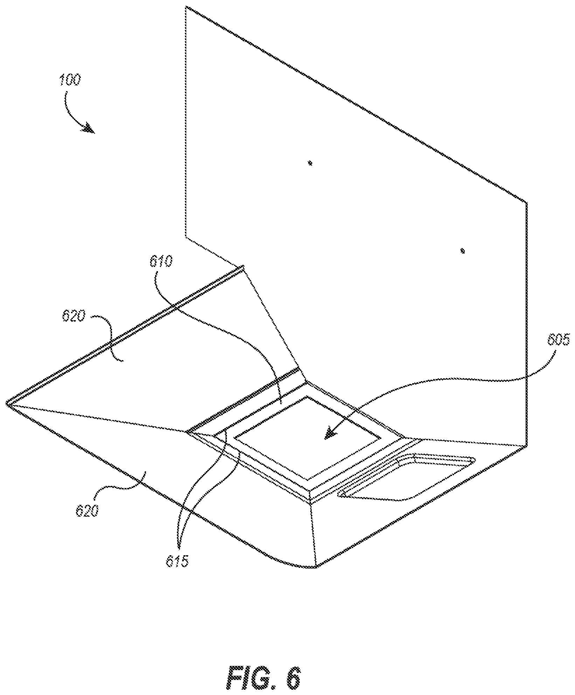

The hopper evacuation insert may be applied to the existing hopper bottom through a variety of means. For example, users may use caulk, welding, adhesive strips, or other appropriate adhesion materials or methods to affix the hopper evacuation insert to the existing hopper bottom.
The hopper bottom embodiments and hopper evacuation insert embodiments as described herein operate to increase the pellet evacuation efficiency of pellet grills. For example, pellet evacuation efficiency of 88.49% has been achieved when utilizing the embodiments described in Figures 2A-2C and 5A-5D. Pellet evacuation efficiency of greater than 95% is readily achievable when utilizing the embodiments expressed in Figures 5A-8C. Alternative embodiments have the potential of achieving even greater pellet evacuation efficiency. Accordingly, the embodiments disclosed herein allow for increased evacuation efficiency and a reduction in the incidence of pellet evacuation failure.

The present invention can be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning of the claims are to be embraced within their scope.

## Claims

1. A pellet hopper assembly (100, 400), comprising:
a hopper bottom, comprising:
a first panel (405a) connected to a second panel (405b) at a first interface (210a) and the second panel (405b) connected to a third panel (405c) at a second interface (210b), wherein a first inner edge (215a) of the first panel (405a), a second inner edge (215b) of the second panel (405b), and a third inner edge (215c) of the third panel (405c) together define a pellet evacuation opening (435), and wherein:
the first panel (405a) forms a first nonzero angle (θ₁) with respect to a horizontal plane (H) such that the first panel (405a) tilts downward toward the pellet evacuation opening (435), the second panel (405b) forms a second nonzero angle (θ₂) with respect to the horizontal plane (H) such that the second panel (405b) tilts downward toward the pellet evacuation opening (435); and
the third panel (405c) forms a third nonzero angle (θ₃) with respect to the horizontal plane (H) such that the third panel (405c) tilts downward toward the pellet evacuation opening (435); and
a wall panel (410) connected to the first and third panels (405a, 405c) at third and fourth interfaces (415a, 415b), respectively, the wall panel (410) comprising:
a main surface (420) extending vertically upward from the third and fourth interfaces (415a, 415b); and
a bottom angled surface (425) connected to the main surface (420), the bottom angled surface (425) including a fourth inner edge (430) that at least partially defines the pellet evacuation opening (435), the bottom angled surface (420) forming a fourth nonzero angle (β) with respect to the horizontal plane (H) such that the bottom angled surface (425) tilts downward toward the pellet evacuation opening (435).

2. The pellet hopper assembly (400) of claim 1, further comprising a pellet evacuation insert (800), the pellet evacuation insert (800) comprising:
a first insert panel (805a) connected to a second insert panel (805b) at a first interface (810a); and
a third insert panel (805c) connected to the second insert panel (805b) at a second interface (810b); wherein:
the first, second, and third insert panels (805a, 805b, 805c) have first, second, and third inner edges (815a, 815b, 815c) that at least partially define a pellet evacuation insert opening (820);
the first, second, and third insert panels are angled at respective first, second, and third nonzero angles (µ₁, µ₂, µ₃) with respect to the horizontal plane (H) such that the first, second, and third insert panels (805a, 805b, 805c) of the pellet evacuation insert (800) tilt downward toward the pellet evacuation insert opening (820); and
each of the first, second, and third insert panels (805a, 805b, 805c) include an outer edge (825a, 825b, 825c) that contacts a top surface of each of the first, second, and third panels (405a, 405b, 405c) of the hopper bottom, respectively.

3. The pellet hopper assembly (100, 400) of claim 2, wherein the pellet evacuation insert (800) further comprises a fourth insert panel (805d) having a fourth inner edge (815d) that at least partially defines the pellet evacuation insert opening (820), the fourth insert panel (800) being angled at a nonzero angle (µ₄) with respect to the horizontal plane (H) so that the fourth insert panel (805d) of the pellet evacuation insert (800) tilts downward toward the pellet evacuation insert opening (820).

4. The pellet hopper assembly of claim 3, wherein the first, second, third, and fourth insert panels (805a, 805b, 805c, 805d) are planar trapezoid so as to form a rectangular pellet evacuation insert opening (820).

5. The pellet hopper assembly of one of claims 2 to 4, wherein the pellet evacuation insert (800) further comprises first, second, and third vertical walls (830a, 830b, 830c) extending downward from the first, second, and third inner edges (815a, 815b, 815c), respectively.

## Patentansprüche

1. Eine Pellet-Behälteranordnung (100, 400), umfassend:
einen Trichterboden, umfassend:
eine erste Platte (405a), die mit einer zweiten Platte (405b) an einer ersten Schnittstelle (210a) verbunden ist, und die zweite Platte (405b), die mit einer dritten Platte (405c) an einer zweiten Schnittstelle (210b) verbunden ist, wobei eine erste innere Kante (215a) der ersten Platte (405a), eine zweite innere Kante (215b) der zweiten Platte (405b) und eine dritte innere Kante (215c) der dritten Platte (405c) zusammen eine Pellet-Evakuierungsöffnung (435) definieren, und wobei:
die erste Platte (405a) einen ersten Winkel (θ₁) ungleich Null in Bezug auf eine horizontale Ebene (H) bildet, so dass die erste Platte (405a) nach unten in Richtung der Pellet-Evakuierungsöffnung (435) geneigt ist,
die zweite Platte (405b) einen zweiten Winkel ungleich Null (θ₂) in Bezug auf die horizontale Ebene (H) bildet, so dass die zweite Platte (405b) nach unten in Richtung der Pellet-Evakuierungsöffnung (435) kippt; und
die dritte Platte (405c) einen dritten Winkel (θ₃) ungleich Null in Bezug auf die horizontale Ebene (H) bildet, so dass die dritte Platte (405c) nach unten in Richtung der Pellet-Evakuierungsöffnung (435) kippt; und
eine Wandplatte (410), die mit der ersten und der dritten Platte (405a, 405c) an einer dritten bzw. vierten Schnittstelle (415a, 415b) verbunden ist, wobei die Wandplatte (410) Folgendes umfasst
eine Hauptfläche (420), die sich von der dritten und vierten Schnittstelle (415a, 415b) vertikal nach oben erstreckt; und
eine untere abgewinkelte Fläche (425), die mit der Hauptfläche (420) verbunden ist, wobei die untere abgewinkelte Fläche (425) eine vierte innere Kante (430) aufweist, die zumindest teilweise die Pellet-Evakuierungsöffnung (435) definiert, wobei die untere abgewinkelte Fläche (420) einen vierten von Null verschiedenen Winkel (β) in Bezug auf die horizontale Ebene (H) bildet, so dass die untere abgewinkelte Fläche (425) nach unten in Richtung der Pellet-Evakuierungsöffnung (435) kippt.

2. Die Pellet-Behälteranordnung (400) nach Anspruch 1, die ferner einen Pellet-Evakuierungseinsatz (800) umfasst, wobei der Pellet-Evakuierungseinsatz (800) Folgendes umfasst:
eine erste Einsatzplatte (805a), die mit einer zweiten Einsatzplatte (805b) an einer ersten Schnittstelle (810a) verbunden ist; und
eine dritte Einsatzplatte (805c), die mit der zweiten Einsatzplatte (805b) an einer zweiten Schnittstelle (810b) verbunden ist; wobei:
die erste, zweite und dritte Einsatzplatte (805a, 805b, 805c) erste, zweite und dritte Innenkanten (815a, 815b, 815c) aufweisen, die zumindest teilweise eine Pellet-Evakuierungseinsatzöffnung (820) definieren;
die erste, zweite und dritte Einsatzplatte in einem jeweiligen ersten, zweiten und dritten Winkel (µ1, µ2, µ3) ungleich Null in Bezug auf die horizontale Ebene (H) abgewinkelt sind, so dass die erste, zweite und dritte Einsatzplatte (805a, 805b, 805c) des Pellet-Evakuierungseinsatzes (800) nach unten in Richtung der Pellet-Evakuierungseinsatzöffnung (820) kippen; und
jede der ersten, zweiten und dritten Einsatzplatten (805a, 805b, 805c) eine Außenkante (825a, 825b, 825c) aufweist, die eine obere Fläche jeder der ersten, zweiten und dritten Platten (405a, 405b, 405c) des Trichterbodens berührt.

3. Die Pellet-Behälteranordnung (100, 400) nach Anspruch 2, wobei der Pellet-Evakuierungseinsatz (800) ferner eine vierte Einsatzplatte (805d) mit einer vierten Innenkante (815d) umfasst, die zumindest teilweise die Pellet-Evakuierungseinsatzöffnung (820) definiert, wobei die vierte Einsatzplatte (800) in einem von Null verschiedenen Winkel (µ₄) in Bezug auf die horizontale Ebene (H) abgewinkelt ist, so dass die vierte Einsatzplatte (805d) des Pellet-Evakuierungseinsatzes (800) nach unten in Richtung der Pellet-Evakuierungseinsatzöffnung (820) kippt.

4. Die Pellet-Behälteranordnung nach Anspruch 3, wobei die erste, zweite, dritte und vierte Einsatzplatte (805a, 805b, 805c, 805d) ein ebenes Trapez sind, so dass eine rechteckige Pellet-Evakuierungseinsatzöffnung (820) entsteht.

5. Die Pellet-Behälteranordnung nach einem der Ansprüche 2 bis 4, wobei der Pellet-Evakuierungseinsatz (800) ferner erste, zweite und dritte vertikale Wände (830a, 830b, 830c) aufweist, die sich von den ersten, zweiten bzw. dritten Innenkanten (815a, 815b, 815c) nach unten erstrecken.

## Revendications

1. Ensemble de trémie à granulés (100, 400), comprenant :
un fond de trémie, comportant :
un premier panneau (405a) connecté à un deuxième panneau (405b) à une première interface (210a) et le deuxième panneau (405b) connecté à un troisième panneau (405c) à une deuxième interface (210b), dans lequel un premier bord interne (215a) du premier panneau (405a), un deuxième bord interne (215b) du deuxième panneau (405b) et un troisième bord interne (215c) du troisième panneau (405c) définissent ensemble une ouverture d'évacuation des granulés (435), et dans lequel :
le premier panneau (405a) forme un premier angle non nul (θ₁) par rapport à un plan horizontal (H), de telle sorte que le premier panneau (405a) est incliné vers le bas vers l'ouverture d'évacuation des granulés (435),
le deuxième panneau (405b) forme un deuxième angle non nul (θ₂) par rapport au plan horizontal (H), de telle sorte que le deuxième panneau (405b) est incliné vers le bas vers l'ouverture d'évacuation des granulés (435) ; et
le troisième panneau (405c) forme un troisième angle non nul (θ₃) par rapport au plan horizontal (H), de telle sorte que le troisième panneau (405c) est incliné vers le bas vers l'ouverture d'évacuation des granulés (435) ; et
un panneau de paroi (410) connecté aux premier et troisième panneaux (405a, 405c) respectivement aux troisième et quatrième interfaces (415a, 415b), le panneau de paroi (410) comprenant :
une surface principale (420) s'étendant verticalement vers le haut à partir des troisième et quatrième interfaces (415a, 415b) ; et
une surface de fond inclinée (425) connectée à la surface principale (420), la surface de fond inclinée (425) comprenant un quatrième bord interne (430) qui définit au moins partiellement l'ouverture d'évacuation des granulés (435), la surface de fond inclinée (420) formant un quatrième angle non nul (β) par rapport au plan horizontal (H) de telle sorte que la surface de fond inclinée (425) est incliné vers le bas vers l'ouverture d'évacuation des granulés (435).

2. Ensemble de trémie à granulés (400) selon la revendication 1, comprenant en outre un insert d'évacuation de granulés (800), l'insert d'évacuation de granulés (800) comprenant :
un premier panneau d'insert (805a) connecté à un deuxième panneau d'insert (805b) à une première interface (810a) ; et
un troisième panneau d'insert (805c) connecté au deuxième panneau d'insert (805b) à une deuxième interface (810b) ;
dans lequel :
les premier, deuxième et troisième panneaux d'insert (805a, 805b, 805c) ont des premier, deuxième et troisième bords internes (815a, 815b, 815c) qui définissent au moins partiellement une ouverture d'insert d'évacuation de granulés (820) ;
les premier, deuxième et troisième panneaux d'insert sont inclinés selon des premier, deuxième et troisième angles respectifs non nuls (µ₁, µ₂, µ₃) par rapport au plan horizontal (H), de telle sorte que les premier, deuxième et troisième panneaux d'insert (805a , 805b, 805c) de l'insert d'évacuation de granulés (800) sont inclinés vers le bas vers l'ouverture d'insert d'évacuation de granulés (820) ; et
chacun des premier, deuxième et troisième panneaux d'insert (805a, 805b, 805c) comprend un bord externe (825a, 825b, 825c) qui entre en contact avec une surface supérieure de chacun des premier, deuxième et troisième panneaux respectifs (405a, 405b, 405c) du fond de trémie.

3. Ensemble de trémie à granulés (100, 400) selon la revendication 2, dans lequel l'insert d'évacuation de granulés (800) comprend en outre un quatrième panneau d'insert (805d) ayant un quatrième bord interne (815d) qui définit au moins partiellement l'ouverture d'insert d'évacuation de granulés (820), le quatrième panneau d'insert (800) étant incliné selon un angle non nul (µ₄) par rapport au plan horizontal (H) de telle sorte que le quatrième panneau d'insert (805d) de l'insert d'évacuation de granulés (800) est incliné vers le bas vers l'ouverture d'insert d'évacuation de granulés (820) .

4. Ensemble de trémie à granulés selon la revendication 3, dans lequel les premier, deuxième, troisième et quatrième panneaux d'insert (805a, 805b, 805c, 805d) sont des trapèzes plans formant une ouverture d'insert d'évacuation de granulés rectangulaire (820).

5. Ensemble de trémie à granulés selon l'une des revendications 2 à 4, dans lequel l'insert d'évacuation de granulés (800) comprend en outre des première, deuxième et troisième parois verticales (830a, 830b, 830c) s'étendant vers le bas à partir des premier, deuxième et troisième bords internes respectifs (815a, 815b, 815c).
